# EUROPEAN PATENT SPECIFICATION

(11) **EP 2 206 642 B1**
(45) Date of publication and mention of the grant of the patent: **14.03.2012**
(21) Application number: 10250041.0
(22) Date of filing: 11.01.2010
(51) Int. Cl.: B62J 29/00, B62J 6/00

(54) **Rear view mirror for single front wheel transport vehicle**
Rückspiegel für Transportfahrzeug mit einem Vorderrad
Rétroviseur pour véhicule de transport à roue avant unique

(30) Priority: 12.01.2009 TW 98200471 U
(43) Date of publication of application: 14.07.2010
(73) Proprietor: Lin, Tzu-Tang, Taipei City 111 (TW)
(72) Inventor: Lin, Tzu-Tang, Taipei City 111 (TW)
(74) Representative: Whitaker, Iain Mark

(56) References cited:
- BE-A7- 1 007 631
- DE-C1- 19 855 099
- GB-A- 1 172 382
- GB-A- 191 413 431
- TW-A- 390 300
- TW-U- M 248 702
- TW-U- M 254 402
- TW-U- M 289 728
- TW-U- M 309 725
- TW-U- M 345 763
- US-A- 4 715 681

## Description

### BACKGROUND OF THE INVENTION

### (a) Field of the Invention

The present invention provides a rear view mirror for single front wheel transport vehicle 1, and more particularly provides a rear view mirror 3 having turn signal lamps that is movably fixed to arbitrary positions on two sides a single front wheel transport vehicle 1, such as adopting at least one rear view mirror 3 fixedly secured to two sides of the handlebar, the front fork or the rear support, and using a controller 5 to control flashing of the turn signal lamp, thereby cautioning people and vehicles at the rear, the front and sides and informing them of the traveling movement of the transport vehicle. The aforementioned front wheel transport vehicle includes motorcycles, bicycles, tricycles, and the like.

### (b) Description of the Prior Art

Rear view mirrors for a bicycle of the prior art are fixed to the handlebar, and enable single direction (such as Taiwan patent Nos. 390300, M545626), or two direction and two-dimensional inward-outward foldable angle adjustment (such as Taiwan patent Nos. M254402, M289728).

Other related prior art includes rear view mirrors used on automobiles and motorcycles provided with audio and lighting effects (for example, Taiwan patent No. M248702). Yet other related prior art includes include rear view mirrors used on bicycles adopting wireless lamp structures (for example, Taiwan patent No. M345763). In addition, the prior art also includes rear view mirrors for bicycles that use wireless lamp signal control (for example, Taiwan patent No. M309725).

In further prior art DE198 55 099C1 the rear view mirror support for use on a bicycle is a telescopic rod arrangement that accommodates wires for lamp signal control.

### SUMMARY OF THE INVENTION

A primary objective of the present invention lies in providing a rear view mirror set for single front wheel transport vehicle that enables easy angular adjustment, in which two ends of a flexible pipe are respectively joined to clamp portions, thereby enabling the two clamp portions to be respectively joined to a fixed position of a transport vehicle and a main body of the rear view mirror. The flexible pipe can be directly turned and bent using the hand to outwardly set the flexible pipe, thereby allowing a rider to see vehicle movement behind the transport vehicle from the rear view mirror.

Another objective of the present invention lies in providing a rear view mirror set for single front wheel transport vehicle that enables easy control of flashing of a turn signal lamp on the rear view mirror, in which a wired or wireless controller is used to control operations of a turn signal lamp provided on one side of the rear view mirror.

The invention is defined in claim 1. Advantageous embodiments are set out in dependent claims 2 to 7.

To enable a further understanding of said objectives and the technological methods of the invention herein, a brief description of the drawings is provided below followed by a detailed description of the preferred embodiments.

### BRIEF DESCRIPTION OF THE DRAWINGS

FIG. 1 is an elevational view of the present invention
FIG. 2 is an exploded elevational view of the present invention.
FIG. 3 is a partial cutaway view of the present invention.
FIG. 4 is a structural schematic view of another clamp portion of the present invention.
FIG. 5 is another structural view of the flexible pipe of the present invention.
FIG. 6 is a drawing depicting an embodiment of the present invention.
FIG. 7 is a schematic view of a wireless controlled turn signal lamp of the present invention.

### DETAILED DESCRIPTION OF THE PREFERRED EMBODIMENTS

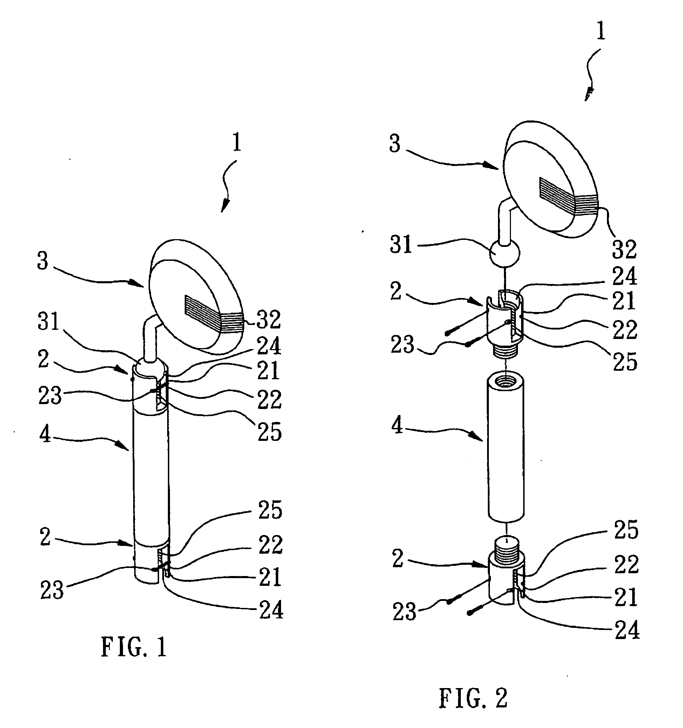

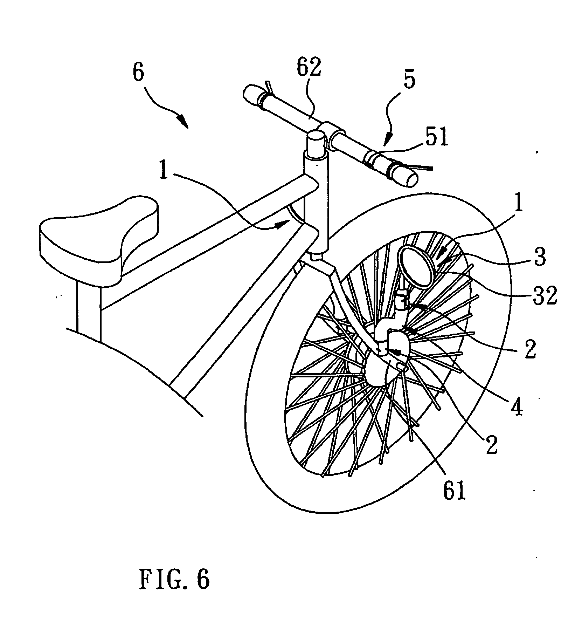

Referring together to FIG. 1 to FIG. 3, wherein the drawings disclose a rear view mirror set for single front wheel transport vehicle 1 of the present invention, comprising: two clamp portions 2, a rear view mirror 3, a flexible pipe 4 and a controller (refer to that assigned number 5 in FIG. 6 ), wherein one end of each of the clamp portions 2 is provided with a gap 21, which enables the clamp portion 2 to straddle and be disposed on the required fixed object (such as two sides of the front fork of a transport vehicle, two sides of the handlebar of a transport vehicle, two sides of the rear seat support of a transport vehicle, and so on.). Fixing members 23 perpendicularly disposed in concentric fixing holes 22 defined in the clamp gap 21 ensure fixedly clamping to the object. A support cavity 24 is defined in at least one inner side wall of the gap 21

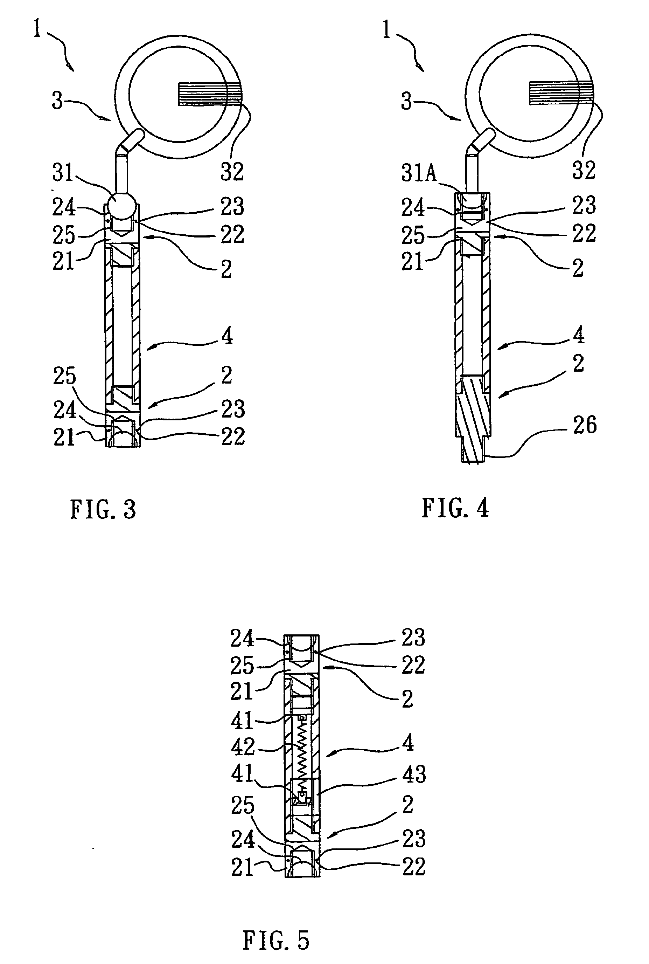

- and in the present embodiment has a spherical arched surface, which enables a rear view mirror connector 31 to be inserted and joined therein. Moreover, at least one inner side wall of the gap 21 is additionally provided with a screw cavity 25, which enables a different shaped connector 31A to be inserted and joined therein (please refer to FIG. 4). Other ends of the clamp portions 2 are fixedly screwed or fixedly locked to the flexible pipe 4. The rear view mirror 3 is provided with the connector 31, and the rear view mirror 3 is internally provided with a turn signal lamp (not shown in the drawings), which is controlled by the controller 5. At least one side of the rear view mirror 3 is provided with a turn signal lamp cover 32, which enables light emission from the turn signal lamp. The rear view mirror 3 is internally provided with a power source to supply electric power to the turn signal lamp and a flashing circuit (not shown in the drawings). The flexible pipe 4 is a flexible metallic pipe (using metal such as nickel titanium alloy - memory metal, aluminum, copper, tin, and so on) or a nonmetallic pipe (using a new polymer formed after mixing two different high polymer monomers, such as high performance polyetherimide (PEI) fiber, used in coronary stent implants, catheters and stitching, and so on.). And can further comprise external encapsulation of a flexible metallic pipe, provided with functionality to enable momentarily angle adjustment. The controller 5 is used to control flashing of the turn signal lamp, and the controller 5 is provided with a switching switch 51, which enables controlling operations of the turn signal lamp within the rear view mirror through switching. Accordingly, the aforementioned implementation enables safeguarding breakage of the lens of the rear view mirror 3 from impact should the transport vehicle provided with a single front wheel topple over. Moreover, angle adjustment of the rear view mirror 3 is even more convenient.

Referring to FIG. 4, and when compared with FIG. 3 it is clear that one end of the clamp portions 2 is not provided with the gap 21, but further comprises a fixing column 26 (including a fixing double-screw bolt). The structure is widely used for joining to a mirror base of existing motorcycles (not shown in the drawings).

Referring to FIG. 5, and when compared to FIG. 3 it is clear that the flexible pipe 4 is internally provided with adjusting members 41 close to two ends, and the adjusting members 41 are joined together using an elastic element 42. Grooves 43 defined on the flexible pipe 4 enables an operator to easily turn the adjusting members 41 to adjust tightness of the elastic element 42, thereby providing a preferred rigidity to the flexible pipe 4.

Referring to the drawings together with FIG. 6, of the embodiments of the present invention depicted in the drawings, FIG. 6 discloses the rear view mirror set for single front wheel transport vehicle 1 implemented on a bicycle 6. A lower clamp portion of the flexible pipe 4 is fixed to the two sides of a front fork 61 of the bicycle 6, thereby enabling the flexible pipe 4 to be manually bent to the required shape and angle to allow the rider to know the movement of people and vehicles behind the bicycle 6 through the lens in the rear view mirror 3. Moreover, the switching switch 51 of the controller 5 can be used to easily control emission of the light source from the turn signal lamp cover 32 of the turn signal lamp to inform people and vehicles ahead, at the sides and behind of the traveling movement of the bicycle.

The aforementioned rear view mirror set for single front wheel transport vehicle 1 can be joined to two sides of a handlebar 62, two sides of the front fork 61, two sides of a rear wheel support (not shown in the drawings) and the rear two sides of a safety helmet, and uniformly controlled by the switching switch 51 of the controller 5. When the rider causes a left turn signal or a right turn signal to be emitted to indicate wanting to make a direction change, a turn signal lamp of the rear view mirror 3 cautions drivers of other vehicles and lets them know of the intention to change direction, thereby safeguarding safety of the rider. Accordingly, vehicles from other directions, including the front, sides and the rear are able to clearly see the flashing turn signal lamp of the rear view mirror 3 of the bicycle 6, thereby ensuring the safety of the rider.

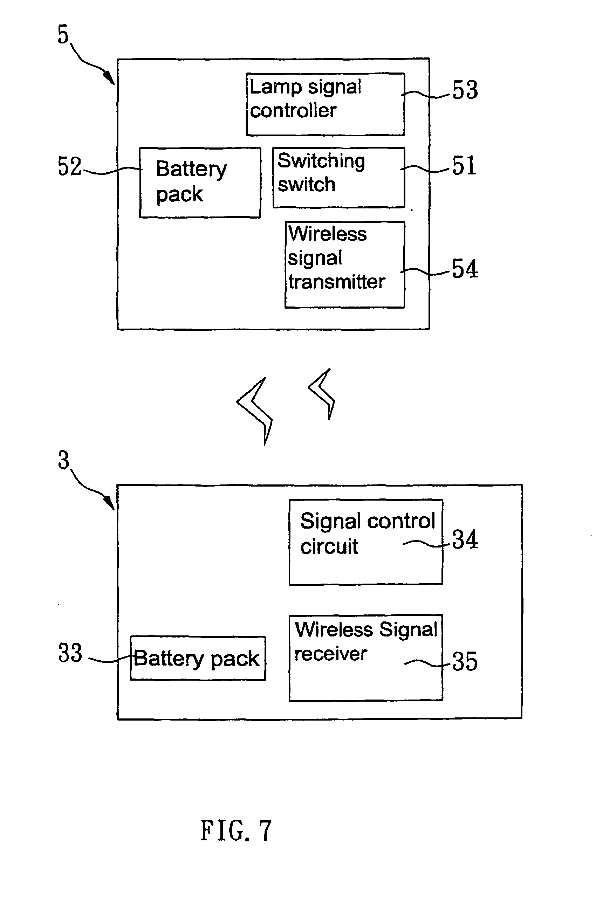

In addition, it is worth mentioning that the rear view mirror set for single front wheel transport vehicle 1 implemented on two sides of a transport vehicle can also use wireless control means (as depicted in FIG. 7), in which the controller 5 is internally provided with a battery pack 52, the switching switch 51, a lamp signal controller 53 and a wireless signal transmitter 54. Moreover, the rear view mirror 3 is internally provided with a battery pack 33, a lamp signal control circuit 34 and a wireless signal receiver 35. The switching switch 51 of the controller 5 is used to transmit left and right turn signals to the lamp signal controller 53, whereupon the wireless signal transmitter 54 transmits the signals to the signal control circuit 34. The wireless signal receiver 35 receives the remote control flashing caution signal for the turn signal lamp from the wireless signal transmitter 54, and after signal processing through the lamp signal control circuit 34, the signal directly controls operations of the turn signal lamp within each set of the rear view mirrors 3. However, because such technology belongs to the prior art, thus, it is not detailed here.

It is of course to be understood that the embodiments described herein are merely illustrative of the principles of the invention and that a wide variety of modifications thereto may be effected by persons skilled in the art without departing from the scope of the invention as set forth in the following claims.

## Claims

1. A rear view mirror set for single front wheel transport vehicle, comprising:
a first clamp portion (2), a rear view mirror (3), at least a side of the rear view mirror (3) is provided with a turn signal lamp, and an end of the rear view mirror (3) is joined to the first clamp portion (2); and a controller (5), wherein the controller (5) controls flashing of the turn signal lamp, **characterized by** a flexible pipe (4) that the user may bend manually into the required shape, two ends of the flexible pipe (4) are respectively joined to the first clamp portion (2) and to a second clamp portion (2).

2. The rear view mirror set for single front wheel transport vehicle according to claim 1, wherein fixing members (23) perpendicularly disposed in concentric fixing holes (22) defined in a clamp gap (21) ensure fixedly clamping to an object.

3. The rear view mirror set for single front wheel transport vehicle according to claim 2, wherein at least one inner side wall of the gap (21) is provided with a spherical arched surface.

4. The rear view mirror set for single front wheel transport vehicle according to claim 2, wherein the gap (21) further comprises a fixing column (26).

5. The rear view mirror set for single front wheel transport vehicle according to claim 2, wherein at least one inner wall of the gap (21) is provided with a screw cavity (25).

6. The rear view mirror set for single front wheel transport vehicle according to claim 1, wherein the flexible pipe (4) is internally provided with adjusting members (41) close to two ends, and the adjusting members (41) are joined together using an elastic element (42).

7. The rear view mirror set for single front wheel transport vehicle according to claim 1, wherein the controller (5) is internally provided with a battery pack (33), a switching switch (51), a lamp signal controller (53) and a wireless signal transmitter (54), and the rear view mirror (3) is internally provided with a battery pack (33), a lamp signal control circuit (34) and a wireless signal receiver (35).

## Patentansprüche

1. Rückspiegelsatz für ein Transportfahrzeug mit einem einzelnen Vorderrad, umfassend:
einen ersten Klemmteil (2), einen Rückspiegel (3), wobei mindestens eine Seite des Rückspiegels (3) mit einer Fahrtrichtungsanzeigelampe ausgestattet ist und ein Ende des Rückspiegels (3) mit dem ersten Klemmteil (2) verbunden ist; und eine Steuereinheit (5),
wobei die Steuereinheit (5) das Blinken der Fahrtrichtungsanzeigelampe steuert,
**gekennzeichnet durch** ein flexibles Rohr (4), das der Benutzer von Hand in die erforderliche Form biegen kann, wobei die beiden Enden des flexiblen Rohres (4) mit dem ersten Klemmteil (2) bzw. einem zweiten Klemmteil (2) verbunden sind.

2. Rückspiegelsatz für ein Transportfahrzeug mit einem einzelnen Vorderrad gemäß Anspruch 1, wobei Befestigungselemente (23), die senkrecht in konzentrischen Befestigungsöffnungen (22), welche in einem Klemmspalt (21) definiert sind, angeordnet sind, das feste Anklemmen an ein Objekt gewährleisten.

3. Rückspiegelsatz für ein Transportfahrzeug mit einem einzelnen Vorderrad gemäß Anspruch 2, wobei mindestens eine innere Seitenwand des Klemmspalts (21) eine kugelförmig gerundete Oberfläche aufweist.

4. Rückspiegelsatz für ein Transportfahrzeug mit einem einzelnen Vorderrad gemäß Anspruch 2, wobei der Klemmspalt (21) ferner eine Befestigungssäule (26) umfasst.

5. Rückspiegelsatz für ein Transportfahrzeug mit einem einzelnen Vorderrad gemäß Anspruch 2, wobei mindestens eine innere Seitenwand des Klemmspalts (21) mit einer Aussparung (25) für eine Schraube versehen ist.

6. Rückspiegelsatz für ein Transportfahrzeug mit einem einzelnen Vorderrad gemäß Anspruch 1, wobei das flexible Rohr (4) innen mit Einstellelementen (41) an den beiden Enden ausgestattet ist und wobei die Einstellelemente (41) durch ein elastisches Element (42) miteinander verbunden sind.

7. Rückspiegelsatz für ein Transportfahrzeug mit einem einzelnen Vorderrad gemäß Anspruch 1, wobei die Steuereinheit (5) im Innern mit einem Batteriepaket (33), einem Wechselschalter (51), einer Lampensignalsteuerung (53) und einem drahtlosen Signalübertrager (54) ausgestattet ist und der Rückspiegel (3) im Innern mit einem Batteriepaket (33), einer Lampensignalsteuersehaltung (34) und einem drahtlosen Signalempfänger (35) ausgestattet ist.

## Revendications

1. Un rétroviseur prévu pour un véhicule de transport à roue avant unique, comportant :
une première portion d'attache (2), un rétroviseur (3), au moins un côté du rétroviseur (3) est muni d'un feu clignotant latéral, et une extrémité du rétroviseur (3) est jointe à la première portion d'attache (2) ; et un contrôleur (5), dans lequel le contrôleur (5) contrôle le clignotement du feu clignotant latéral, **caractérisé par** un tuyau flexible (4) que l'utilisateur peut plier manuellement dans la forme requise, deux extrémités du tuyau flexible (4) sont jointes respectivement à la première portion d'attache (2) et à une deuxième portion d'attache (2).

2. Le rétroviseur prévu pour un véhicule de transport à roue avant unique selon la revendication 1, dans lequel des membres de fixation (23) disposés perpendiculairement en trous de fixation concentriques (22) définis dans un interstice d'attache (21) assurent une attache fixe à un objet.

3. Le rétroviseur prévu pour un véhicule de transport à roue avant unique selon la revendication 2, dans lequel au moins une paroi latérale intérieure de l'interstice (21) est munie d'une surface arquée sphérique.

4. Le rétroviseur prévu pour un véhicule de transport à roue avant unique selon la revendication 2, dans lequel l'interstice (21) comporte de plus une colonne de fixation (26).

5. Le rétroviseur prévu pour un véhicule de transport à roue avant unique selon la revendication 2, dans lequel au moins une paroi intérieure de l'interstice (21) est munie d'une cavité de vis (25).

6. Le rétroviseur prévu pour un véhicule de transport à roue avant unique selon la revendication 1, dans lequel le tuyau flexible (4) est muni à l'intérieur de membres d'ajustement (41) proches de deux extrémités, et les membres d'ajustement (41) sont joints ensemble à l'aide d'un élément élastique (42).

7. Le rétroviseur prévu pour un véhicule de transport à roue avant unique selon la revendication 1, dans lequel le contrôleur (5) est muni à l'intérieur d'un bloc-batterie (33), d'un commutateur de commutation (51), d'un contrôleur de feu clignotant (53) et d'un émetteur de signaux sans fil (54), et le rétroviseur (3) est muni à l'intérieur d'un bloc-batterie (33), d'un circuit de contrôle de feu clignotant (34) et d'un récepteur de signaux sans fil (35).
